**Europäisches Patentamt**

(19) **European Patent Office**

**Office européen des brevets**

(11) Publication number: **0 058 789**
**B1**

(12) **EUROPEAN PATENT SPECIFICATION**

(45) Date of publication of patent specification: **01.10.86**

(21) Application number: **81300728.3**

(22) Date of filing: **20.02.81**

(51) Int. Cl.⁴: **G 02 B 6/26**

(54) Fiber optics communications modules.

(43) Date of publication of application:
**01.09.82 Bulletin 82/35**

(45) Publication of the grant of the patent:
**01.10.86 Bulletin 86/40**

(84) Designated Contracting States:
**BE DE FR GB IT NL SE**

(56) References cited:

**ELECTRO-OPTICAL SYSTEM DESIGN, vol. 12, no. 6, June 1980, Chicago, US "Family of Couplers Described", page 16**

**LASER FOCUS, vol. 16, no. 9, September 1980, Newton, US "Kaptron Inc, formed by a fiber pioneer begins offering couplers and splitters", pages 71-72**

(73) Proprietor: **KAPTRON INC.**
**580 College Avenue**
**Palo Alto California (US)**

(72) Inventor: **Kapany, Narinder Singh**
**2126 Greenways Drive**
**Woodside California (US)**
Inventor: **Unterleitner, Fred Charles**
**580 College Avenue**
**Palo Alto California (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

This invention relates to an optical fibre connector, that is to say a connector for connecting an optical fibre to another optical fibre, or to a light source, or to a light receiver.

An optical fibre connector is disclosed on pages 71—72 of the periodical LASER FOCUS Volume 16 No. 9 (September 1980) which comprises an input port for mounting a light source, and an output port conjugate to the input port for mounting a light receiver. Both the light source and the light receiver are optical fibres. A reflecting optical system is provided for focusing most of the light from the light source to the receiver.

The disclosed connector is intended primarily for coupling optical fibres in a manner which provides for monitoring of the signals passing through the connector. The connector is equally effective over a range of wavelengths, and is thus well suited to connecting optical fibres operating over a range of wavelengths. The connector is not, however, capable of treating different wavelengths in a different manner, and is thus unsuitable for, for example, monitoring only signals of a particular wavelength, or, more importantly, for transmitting to the output fibre only signals of a certain wavelength.

A connector according to the present invention is capable of selecting only one wavelength of a range of wavelengths received from an input fibre and transmitting this one wavelength to the output fibre. This facility can be used for a number of purposes, and in particular, embodiments of the present invention are particularly useful for mixing signals from a range of single wavelength sources into a single output fibre (duplexing and multiplexing) and for splitting signals of a range of wavelengths received from an input fibre into a corresponding range of single wavelengths output signals (demultiplexing).

It will be appreciated that a light source may be a fibre or some device in which light is generated, and that a light receiver may be a fibre or a transducer for converting a received light signal to a corresponding electrical signal. Further, because of the inherent symmetry in optical systems, either of a pair of conjugate input and output ports may act as an input port whilst the other of the pair acts as the corresponding output port.

The invention will be better understood from the following description of preferred embodiments thereof, given by way of example only, reference being had to the accompanying drawings wherein:

Figure 1 is a simplified cross-sectional view of a two colour duplexer; and

Figure 2 is a simplified cross-section of a multiplexer.

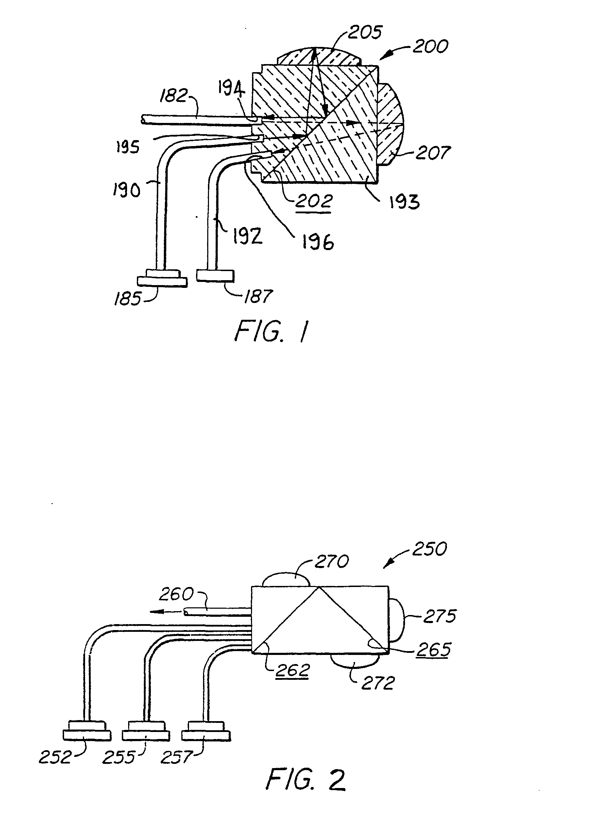

Referring firstly to Figure 1 there is shown a simplified cross-sectional view of a duplexer 200. The purpose of the duplexer is to permit optical information to be transmitted simultaneously in both directions on a single fibre 182. This is accomplished by using optical signals of different wavelengths for different directional transmission, and incorporating classification means to separate the optical signals.

In particular, duplexer 200 couples a source 185 of light of a first wavelength and a detector 187 sensitive to light of a second different wavelength to a fibre 182. Whilst source 185 and detector 187 are shown communicating to duplexer 200 by short fibres 190 and 192 such sources and/or detectors could be directly mounted on the duplexer.

The duplexer 200 itself comprises a transparent body 193 in which are formed fibre insertion holes 194, 195, 196 for respectively receiving fibres 182, 190 and 192. The fibre insertion holes locate the ends of the fibres 182, 190 and 192 at respective ports.

A reflecting optical system comprising a first reflector 202 and a second reflector 205 is provided for focusing light from the fibre 190 onto the end of the fibre 182. The reflector 202 is in the form of a dichroic beam splitter disposed at approximately 45° to the axis of fibre 182 and is reflective with respect of light of the wavelength eminating from source 185. Thus, the reflective optical system comprising dichroic reflector 102 and imaging reflector 205 is effective to focus light from the input port at the end of fibre 190 to the output port at the end of fibre 182.

The dichroic beam splitter 202 is, however, transparent to light of a second wavelength eminating from fibre 182. Such light passes through dichroic beam splitter 202 and is reflected by imaging reflector 207 to an outlet port defined at the end of fibre 192, and travels from this outlet port via fibre 192 to detector 187.

It will be appreciated that in the embodiment of the invention shown in Figure 1 the dichroic beam splitter 202 acts as a classifying means for defining an optical path between the light source 185 and the fibre 182 which is effective to focus light on the fibre 182 only if that light is of a wavelength reflected by the dichroic beam splitter 202.

In a duplex system a similar duplexer would be employed at the remote end of fibre 182 except that source 185 and detector 187 would be replaced by a detector sensitive to light of the frequency generated by source 185 and a source of light to which the detector 187 is sensitive, respectively.

Figure 2 shows a three colour multiplexer 250 for transmitting light at three wavelengths from respective sources 252, 255 and 257 along a single fibre 260. This is accomplished in a manner similar to that described above with reference to Figure 1 except that two dichroic beam splitter reflective surfaces 262 and 265 are provided, and three reflective imaging elements 270, 272 and 275 are provided.

## Claims

1. An optical fibre connector comprising: a first port (194) defining a first image location; a second port (196) defining a second image location, at least one of said ports being suitable to position the end of an optical fibre (182, 192) at its associated image location; and a reflecting optical system (207) for focusing light from one of the image locations onto the other of the image locations, characterised in that the connector includes a third port (195) defining a third image location, and a second optical system (202, 205) for focusing light from the third image location onto the first image location along a second optical path, the second optical system including a dichroic reflector (202) which in part defines the second optical path whereby light is transmitted from the third image location to the first image location only if it is of a wavelength reflected by the dichroic reflector (202), said first optical path extending through said dichroic reflector (202).

2. An optical fibre connector according to claim 1 characterised in that the connector includes a fourth port defining a fourth image location, and a third optical system (265, 272) for focusing light from the fourth image location onto the first image location along a third optical path.

3. An optical fibre connector according to claim 2 characterised in that the third optical system is a reflecting optical system which includes a second dichroic reflector (265) having a characteristic frequency different from that of the first dichroic reflector (262) whereby light is reflected from the fourth image location to the first image location only if it is of the wavelength reflected by the second dichroic reflector.

4. An optical fibre connector according to claim 1 characterised in that a fibre (182) is provided at the first image location; a detector (187) is provided at the second image location and a light source (185) is provided at the third image location whereby light of a frequency not reflected by the dichroic reflector (202) received from the fibre (182) is reflected to the detector (187) and light of a frequency reflected by the dichroic reflector generated by the light source (185) is reflected to the fibre (182).

**Patentansprüche**

1. Faseroptisches Verbindungsstück mit einer ersten, eine erste Bildstelle definierenden Öffnung (194), einer zweiten, eine zweite Bildstelle definierenden Öffnung ·(196), wobei mindestens eine der besagten Öffnungen dazu geeignet ist, das Ende einer Lichtfaser (182, 192) an seine zugehörige Bildstelle zu positionieren, und eine spiegelnde Optik (207) zum Fokussieren von Licht von einer der Bildstellen auf die andere, dadurch gekennzeichnet, dass das Verbindungsstück eine dritte, eine dritte Bildstelle definierende Öffnung (195) und eine zweite Optik (202, 205) zum Fokussieren von Licht von der dritten Bildstelle auf die erste Bildstelle entlang eines zweiten Lichtwegs umfasst, wobei die zweite Optik einen dichroitischen Spiegel (202) enthält, der teilweise den zweiten Lichtweg definiert, wobei Licht nur dann von der dritten Bildstelle zur ersten Bildstelle übertragen wird, wenn es eine vom dichroitischen Spiegel (20) reflektierte Wellenlänge besitzt, wobei sich der erste Lichtweg durch den besagten dichroitischen Spiegel (202) erstreckt.

2. Faseroptisches Verbindungsstück nach Anspruch 1, dadurch gekennzeichnet, dass das Verbindungsstück eine vierte, eine vierte Bildstelle definierende Öffnung und eine dritte Optik (265, 272) zum Fokussieren von Licht von der vierten Bildstelle auf die erste Bildstelle entlang eines dritten Lichtwegs umfasst.

3. Faseroptisches Verbindungsstück nach Anspruch 2, dadurch gekennzeichnet, dass die dritte Optik eine reflektierende Optik ist, die einen zweiten dichroitischen Spiegel (265) mit einer sich von der des ersten dichroitischen Spiegels (262) unterscheidenden Eigenfrequenz umfasst, wobei Licht nur dann von der vierten Bildstelle zur ersten Bildstelle reflektiert wird, wenn es die vom zweiten dichroitischen Spiegel reflektierte Wellenlänge besitzt.

4. Faseroptisches Verbindungsstück nach Anspruch 1, dadurch gekennzeichnet, dass eine Faser (182) an der ersten Bildstelle, ein Detektor (187) an der zweiten Bildstelle und eine Lichtquelle (185) an der dritten Bildstelle vorgesehen sind, wobei von der Faser (182) empfangenes Licht mit einer nicht vom dichroitischen Spiegel (202) reflektierten Frequenz zum Detektor (187) reflektiert wird und von der Lichtquelle (185) erzeugtes Licht mit einer vom dichroitischen Spiegel reflektierten Frequenz zur Faser (182) reflektiert wird.

**Revendications**

1. Connecteur de fibres optiques comprenant: un premier accès (194) définissant un premier emplacement d'image, un deuxième accès (196) définissant un deuxième emplacement d'image, au moins un des accès convenant pour positionner l'extrémité d'une fibre optique (182, 192) au niveau de son emplacement d'image associé, et un système optique réfléchissant (207) pour focaliser de la lumière depuis un des emplacements d'image sur l'autre, caractérisé en ce qu'il comprend un troisième accès (195) définissant un troisième emplacement d'image et un second système optique (202, 205) pour focaliser de la lumière depuis le troisième emplacement d'image sur le premier emplacement d'image suivant un second trajet optique, le second système optique comprenant un réflecteur dichroïque (202) qui définit en partie le second trajet optique de sorte que de la lumière n'est transmise à partir du troisième emplacement d'image vers le premier emplacement d'image que s'il s'agit d'une longueur d'onde réfléchie par le réflecteur dichroïque (202), le premier trajet optique traversant le réflecteur dichroïque (202).

2. Connecteur de fibres optiques suivant la revendication 1, caractérisé en ce qu'il comprend un quatrième accès définissant un quatrième emplacement d'image et un troisième système optique (265, 272) pour focaliser de la lumière depuis le quatrième emplacement d'image sur le premier emplacement d'image suivant un troisième trajet optique.

3. Connecteur de fibres optiques suivant la revendication 2, caractérisé en ce que le troisième système optique est un système optique réfléchissant qui comprend un second réflecteur dichroïque (265) présentant une fréquence caractéristique différente de celle du premier réflecteur dichroïque (262) de sorte que de la lumière n'est réfléchie depuis le quatrième emplacement d'image vers le premier emplacement d'image que s'il s'agit de la longueur d'onde réfléchie par le second réflecteur dichroïque.

4. Connecteur de fibres optiques suivant la revendication 1, caractérisé en ce qu'une fibre (182) est prévue au premier emplacement d'image, un détecteur (187) est prévu au deuxième emplacement d'image et une source lumineuse (185) est prévue au troisième emplacement d'image de sorte que de la lumière d'une fréquence non réfléchie par le réflecteur dichroïque (202) reçue de la fibre (182) est réfléchie vers le détecteur (187) et de la lumière d'une fréquence réfléchie par le réflecteur dichroïque, produite par la source lumineuse (185), est réfléchie vers la fibre (182).

FIG. 1

FIG. 2